# EUROPÄISCHE PATENTSCHRIFT

(11) **EP 0 491 242 B1**
(45) Veröffentlichungstag und Bekanntmachung des Hinweises auf die Patenterteilung: **08.06.1994**
(21) Anmeldenummer: 91120901.3
(22) Anmeldetag: 05.12.1991
(51) Int. Cl.: B23K 26/00, B23Q 3/155

(54) **Werkzeugmaschine zur abtragenden Werkstückbearbeitung mittels Laserstrahls**
Machine-tool for abrasive machining workpieces with a laser beam
Machine-outil pour l'usinage abrasif de pièces au moyen d'un faisceau laser

(30) Priorität: 18.12.1990 DE 4040554
(43) Veröffentlichungstag der Anmeldung: 24.06.1992
(73) Patentinhaber: MAHO Aktiengesellschaft, D-87459 Pfronten (DE)
(72) Erfinder: Babel, Werner, W-8962 Pfronten (DE)
(74) Vertreter: Beetz & Partner Patentanwälte

(56) Entgegenhaltungen:
- EP-A- 0 158 866
- EP-A- 0 158 866
- EP-A- 0 416 112
- EP-A- 0 416 112
- PATENT ABSTRACTS OF JAPAN vol. 10, no. 372 (M-544)(2429) 11. Dezember 1986

## Beschreibung

Die Erfindung betrifft eine Werkzeugmaschine zur abtragenden Werkstückbearbeitung mittels Laserstrahls der im Oberbegriff des Patentanspruchs 1 angegebenen Gattung.

Eine derartige Werkzeugmaschine ist aus der JP-A-61-164 738 bekannt.

In neuerer Zeit sind verschiedene Anlagen und Vorrichtungen zur Werkstückbearbeitung entwickelt worden, bei denen ein Laserstrahl das eigentliche Bearbeitungswerkzeug zum Trennen, Schweißen und/oder Abtragen darstellt. Neben dem Trennen und Schweißen von Blechen, Folien od. dgl. ist insbesondere das Abtragen und Herstellen von tieferen Hohlräumen in massiven Werkstücken ein Einsatzgebiet für entsprechend ausgelegte Laser-Maschinen, dem in der Zukunft besonders bei der Bearbeitung von bisher kritischen Werkstoffen, wie hochlegierten Stählen, Hartmetallen, Keramiken, Verbundwerkstoffen, Gläsern usw., eine zunehmende Bedeutung zukommen wird. Aus einer Reihe von Druckschriften, wie z. B. DE-24 43 334 A1, DE-GM 87 01 354.1, JP-OS 59-47086 und US-PS 4 644 126, sind Abtragsverfahren mittels Laserstrahls bekannt, bei denen ein hochenergetischer CO₂-Laser über eine Optik fokussiert wird und zusammen mit einem Arbeits- oder Hilfsgas auf das zu bearbeitende Werkstück auftrifft. Alle diese Anlagen sind jedoch auf die reine Laser-Bearbeitung beschränkt.

Aus der DE-A-34 10 913 ist eine Stanz- bzw. Nibbelmaschine zur Blechbearbeitung bekannt, bei welcher eine Laser-Schneideinrichtung oder ein Stanz- bzw. Nibbelwerkzeug wahlweise in einer gemeinsamen Werkzeugaufnahme angeordnet werden kann, wobei der eine Werkzeugtyp gegen den anderen mittels eines Werkzeugwechslers ausgewechselt wird, um aufeinanderfolgende Laserschneidvorgänge und Nibbel- bzw. Stanzvorgänge an dem tafelförmigen Werkstück in gleicher Position ausführen zu können. Mit dieser Maschine lassen sich jedoch keine Abtragsarbeiten durchführen, d. h. keine Hohlräume in massiven Werkstücken herstellen.

Gegenstand der US-A-4 469 930 ist eine dreidimensional arbeitende Laser-Schneidmaschine, bei welcher ein Laser-Schneidkopf, eine Hochgeschwindigkeits-Schneidspindel und ein Taster nebeneinander an der Stirnseite eines Vertikalschlittens einzeln bewegbar montiert sind. Durch eine Horizontalbewegung des Schlittens kann jede dieser drei Einheiten in eine vorgegebene Bearbeitungsposition verfahren werden. Diese Maschine ist konstruktiv und steuerungstechnisch außerordentlich aufwendig.

Bei der gattungsgemäßen Werkzeugmaschine nach der JP-A-61-164 738 ist das Laseraggregat seitlich neben dem Spindelgehäuse angeordnet und der Laserstrahl wird seitlich und parallel zur Arbeitsspindel geführt. An dem Spindelgehäuse und auch in einem einwechselbaren Laserkopf ist eine aufwendige Umlenkoptik vorgesehen.

Aufgabe der Erfindung ist es, eine Werkzeugmaschine zur Werkstückbearbeitung mittels Laserstrahls zu schaffen, die ein erweitertes Bearbeitungsspektrum besitzt und auch spanende Bearbeitungsvorgänge an einem Werkstück in einer Aufspannung ohne aufwendige und störanfällige Umlenkung des Laserstrahls ermöglicht.

Diese Aufgabe wird erfindungsgemäß durch die im Patentanspruch 1 angegebenen Merkmale gelöst.

Eine zweckmäßige Ausgestaltung der erfindungsgemäßen Maschine zeichnet sich dadurch aus, daß die Fokussieroptik und der Düsenkopf an einem in die Arbeitsspindel einwechselbaren Werkzeughalter angebaut sind, wobei die in der Achse des Laserstrahls im Gehäuse gelagerte Arbeitsspindel mit ihren Arretierelementen den - in herkömmmlicher Weise ausgebildeten - Werkzeughalter genau fixiert.

Eine auf die Charakteristiken der Laser-Bearbeitung abgestimmte Weiterbildung der Erfindung zeichnet sich dadurch aus, daß im Gehäuse ein Schnell-Läufer-Motor koaxial zur Laserstrahl-Achse angeordnet ist, dessen Läufer mit der Arbeitsspindel entweder direkt verbunden oder über ein Getriebe kuppelbar ist. Diese Ausführung ist insofern besonders vorteilhaft, weil durch die hohen Drehzahlen dieses Motortyps Egalisierarbeiten an den zuvor durch den Laserstrahl bearbeiteten Werkstücken durchgeführt werden können, und zwar bei äußerst geringem zusätzlichem Platzbedarf.

Ein wesentlicher Vorzug der erfindungsgemäßen Werkzeugmaschine liegt in dem kombinatorischen Effekt, der sich durch die Möglichkeit einer Werkstückbearbeitung mittels Laserstrahls und mittels spanender Werkzeuge auf der gleichen Maschine ergibt. So können beispielsweise durch die Verwendung eines Schnell-Läufer-Motors, dessen Drehzahl über 15.000 Upm liegt, Egalisierarbeiten an den zuvor durch die Laserbearbeitung erzeugten Werkstückflächen durchgeführt werden. Darüber hinaus lassen sich auch mehrschichtig aufgebaute Werkstücke je nach den speziellen Eigenschaften der einzelnen Schichten entweder mittels Laserstrahls oder durch Fräs-, Bohr- oder Schleifwerkzeuge bearbeiten. Dies gilt beispielsweise für Werkzeuge und deren Rohlinge, die ganz oder teilweise mit Hartmetall, Keramik od. dgl. beschichtet sind.

Weitere Besonderheiten und Vorzüge der erfindungsgemäßen Maschine ergeben sich aus der folgenden Beschreibung eines bevorzugten Ausführungsbeispiels anhand der Zeichnung. Es zeigen:
- Fig. 1: eine Werkzeugmaschine in teilgeschnittener Seitenansicht;
- Fig. 2: das Gehäuse für u. a. die Arbeitsspindel in teilgeschnittener Seitenansicht mit eingewechseltem Laserkopf;
- Fig. 3: das Gehäuse nach Fig. 2 mit eingewechseltem Fräswerkzeug.

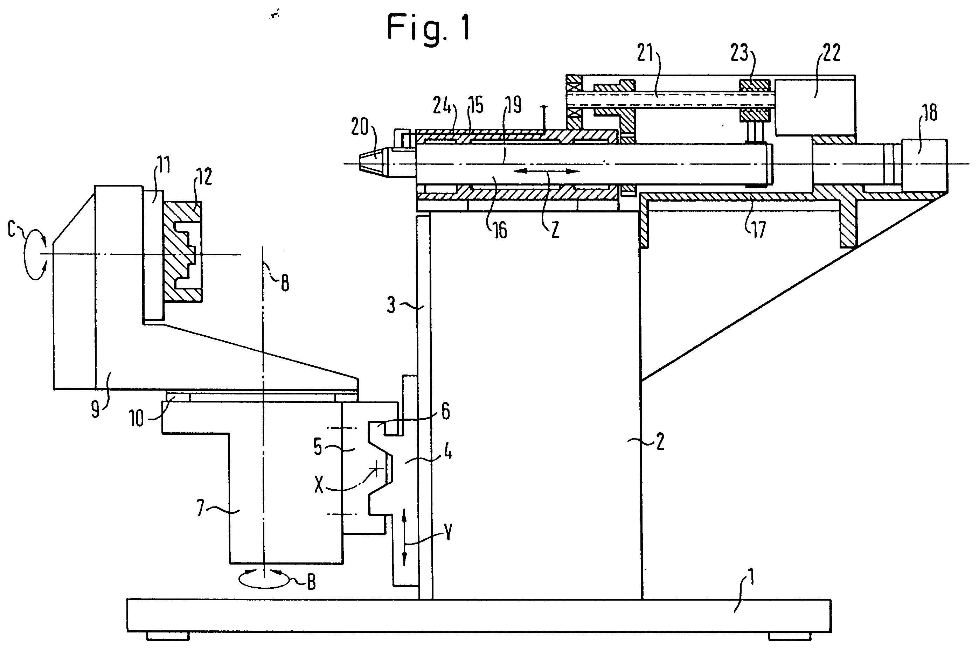

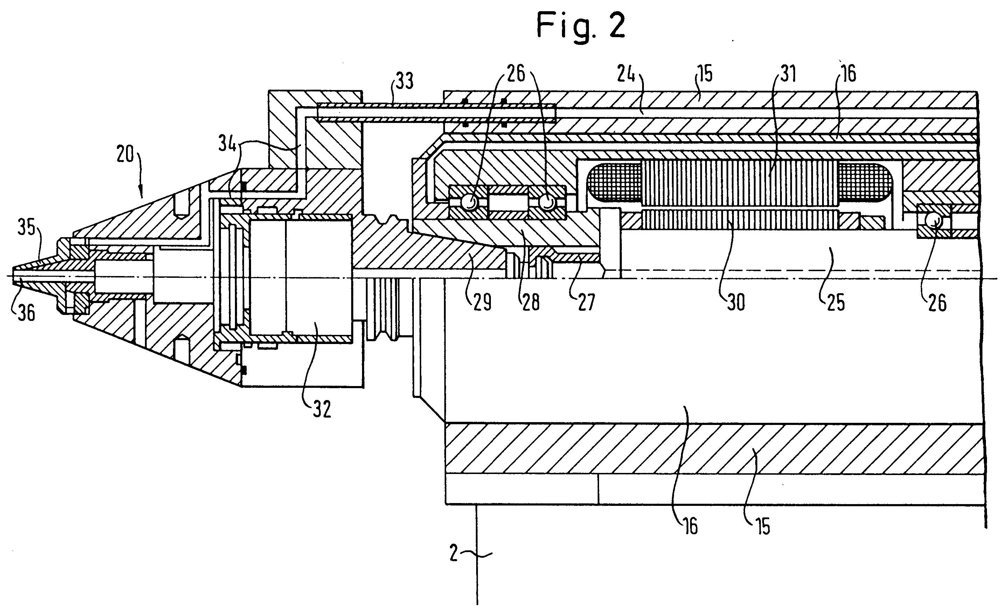

Die in Fig. 1 schematisch dargestellte Werkzeugmaschine enthält eine Basis 1, auf der ein formsteifer Ständer 2 befestigt ist. An der Vorderseite des Ständers 2 montierte vertikale Führungsschienen 3 dienen der vertikal in Richtung des Doppelpfeils Y verfahrbaren Halterung einer Konsole 4, an welcher ein Schlitten 5 über Führungsschienen 6 horizontal in X-Richtung verfahrbar montiert ist. Ein an diesem Schlitten 5 befestigter Unterbau 7 trägt einen um die Vertikalachse 8 in Pfeilrichtung B verdrehbaren Werkstücktisch 9, der auf kreisförmigen Führungen 10 gelagert ist und durch einen im Unterbau 7 montierten Motor um die Hochachse 8 verdreht wird. Auf einer vertikalen Tischplatte 11 ist ein Werkstück 12 festgespannt, wobei die Tischplatte 11 um die horizontale C-Achse motorisch durch einen im Winkeltisch 9 eingebauten Elektromotor verdreht werden kann.
Auf dem Ständer 2 ist ein Gehäuse 15 montiert, in dem ein Führungsrohr 16 in Richtung des Doppelpfeils Z horizontal verschiebbar aufgenommen ist. Hinter diesem Führungsrohr 16 befindet sich auf einer am Ständer 2 angebauten Tragkonsole 17 ein Laseraggregat 18 zur Erzeugung eines in der Gehäuseachse 19 verlaufenden Laserstrahls. Am vorderen Ende des Führungsrohrs 16 ist ein anhand der Fig. 2 im einzelnen beschriebener Laserkopf 20 montiert. Die Vorschubbewegung des Führungsrohrs 16 erfolgt mittels eines Spindeltriebs, dessen Kugelumlaufspindel 21 von einem Motor 22 angetrieben wird und eine auf das Führungsrohr 16 einwirkende Spindelmutter 23 translatorisch verschiebt. Dem Düsenkopf 20 wird ein Arbeitsgas, z. B. mit Sauerstoff angereicherte Luft, sowie ggf. ein weiteres Fluid, z. B. eine Spülflüssigkeit, über Kanäle 24 zugeführt, von denen in Fig. 1 nur einer dargestellt ist.

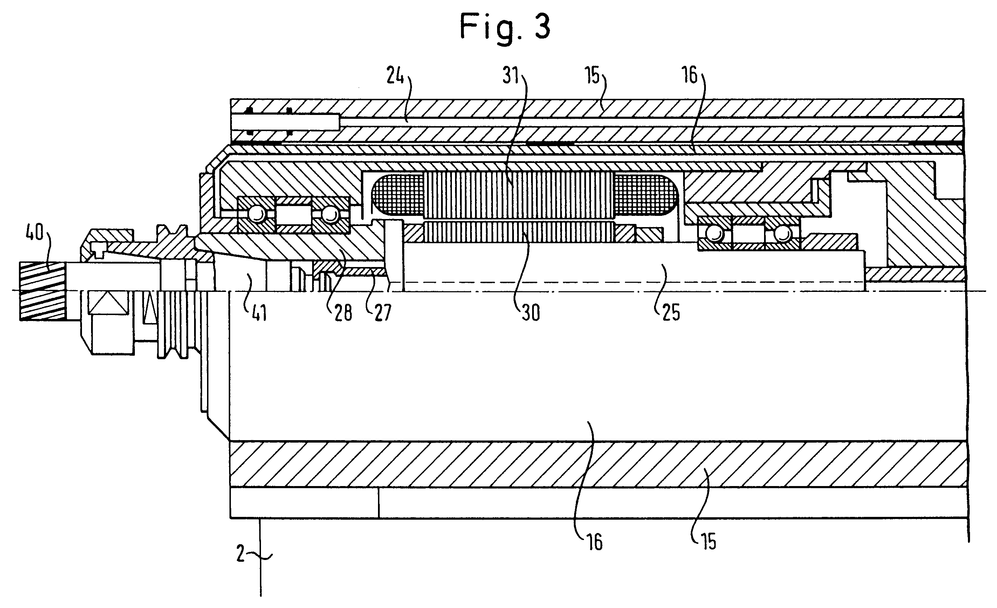

Wie aus den Fig. 2 und 3 ersichtlich, ist im Inneren des Führungsrohrs 16 eine Arbeitsspindel 25 in Wälzlagern 26 drehbar gelagert, in deren Innenraum Arretierelemente in Form einer Spannzange 27 angeordnet sind. Das vordere Endteil 28 der Arbeitsspindel weist eine konische Öffnung zur festen Aufnahme eines Werkzeughalters (ISO-Kegel) auf, an dessen freiem Ende die Spannzange 27 angreift. Auf der Arbeitsspindel 25 ist der Läufer 30 eines sog. Schnell-Läufer-Motors befestigt, dessen hohlzylindrischer Ständer 31 im Führungsrohr montiert ist.

Bei der in Fig. 2 dargestellten Ausführung ist an den Werkzeughalter 29 der Düsenkopf 20 angebaut und zusätzlich eine - nicht im einzelnen dargestellte - Fokussieroptik 32 für den Laserstrahl integriert. Über eine als Schiebehülse 33 ausgebildete Fluidkupplung wird eine Strömungsverbindung zwischen dem im Gehäuse 15 verlaufenden Fluidkanal 24 und einem Kanalsystem 34 im Düsenkopf hergestellt. Am vorderen Ende des Düsenkopfes 20 befindet sich die eigentliche Düse 35 mit einer zentralen Auslaßöffnung 36. Eine besonders zweckmäßige Düsenausführung ist in dem G 89 11 733.6 beschrieben.

Gemäß Fig. 3 ist in die Arbeitsspindel 28 statt des in Fig. 2 dargestellten Düsen- und Laserkopfes 20 ein Fräswerkzeug 40 mittels eines herkömmlichen Werkzeughalters 41 eingespannt, wobei die Wechselvorgänge durch einen - nicht dargestellten - Werkzeugwechsler vorgenommen werden können, dessen Greiferzangen an den Ringbunden der Werkzeughalter 29 bzw. 41 angreifen.

Die Arbeitsweise der erfindungsgemäßen Werkzeugmaschine ergibt sich ohne weiteres aus der Zeichnung. Zur Laser-Bearbeitung des Werkstücks 12 wird die Konsole 4 in Richtung des Pfeiles Y so weit nach oben gefahren, bis die Bearbeitungsstelle am Werkstück in der Laserstrahl-Achse 19 liegt. Gleichzeitig wird das Führungsrohr 16 so weit vorgeschoben, bis sich der Düsenkopf 20 unmittelbar vor der zu bearbeitenden Werkstückfläche befindet. Durch Aktivieren des Laseraggregats 18 erfolgt schichtweise der Abtragsvorgang, wobei der Werkstücktisch kombinierte Horizontalbewegungen in Richtung der X-Achse sowie Verschwenkbewegungen um die Hochachse 8 in Richtung des Doppelpfeiles B ausführt. Zur Durchführung von spanenden Bearbeitungsvorgängen am Werkstück 12 wird der in Fig. 2 dargestellte Düsen-Laser-Kopf 20 mit Hilfe eines nicht dargestellten Werkzeugwechslers gegen ein Spanwerkzeug 40 ausgetauscht, wobei die Wechselvorgänge mittels einer Programmsteuerung automatisiert ablaufen können. Statt des Fräswerkzeugs gemäß Fig. 3 können selbstverständlich auch andere Werkzeuge, insbesondere zur Egalisierung und Feinbearbeitung der zuvor durch den Laserstrahl erhaltenen Werkstückflächen, eingewechselt werden. Zu diesem Zweck ist es sachdienlich, der Werkzeugmaschine nach Fig. 1 ein mit einer Vielzahl von Werkzeugen besetztes Magazin zuzuordnen, welches auch unterschiedlich gestaltete Düsen-Laser-Köpfe enthalten kann.

Die Erfindung ist nicht auf das dargestellte Ausführungsbeispiel beschränkt. So können auch anders ausgebildete Fräs-, Bohr- und ggf. Dreh-Maschinen mit einem in der Achse der Arbeitsspindel positionierten Laseraggregat 18 ausgerüstet werden, wobei dann die Arbeitsspindel eine zentrale Durchgangsbohrung für den Laserstrahl aufweisen muß.

## Patentansprüche

1. Werkzeugmaschine zur wahlweisen Werkstückbearbeitung mittels Laserstrahls oder mittels eines spanenden Werkzeugs,
mit einem an einem Maschinenständer (2) montierten Gehäuse (15),
mit einem am Gehäuse montierten Laseraggregat (18) und mit einer im Gehäuse (15) gelagerten motorisch angetriebenen Arbeitsspindel (25, 28), die Arretierelemente (27) zum Einspannen eines Werkzeughalters (29, 41) aufweist,
**dadurch gekennzeichnet**,
daß die Zuführung des Laserstrahls zu einem Düsenkopf (20) in der Achse (18) der hohlen Arbeitsspindel (28) erfolgt,
daß der Düsenkopf (20) eine Fokussieroptik (32) für den Laserstrahl sowie ggf. Zuführungen (34) für mindestens ein Fluid zu der zentralen Austrittsöffnung (36) des Laserstrahls aufweist und
daß im Gehäuse (15) ein Schnelläufer-Motor (30, 31) koaxial zur Spindelachse (18) angeordnet ist, dessen hohlzylindrischer Läufer (30) die Arbeitsspindel (28) bei der spanenden Werkstückbearbeitung antreibt.

2. Werkzeugmaschine nach Anspruch 1,
dadurch gekennzeichnet,
daß die Fokussieroptik (32) und der Düsenkopf (20) an einen in die Arbeitsspindel (28) einwechselbaren Werkzeughalter (29) angebaut sind.

3. Werkzeugmaschine nach Anspruch 1 oder 2,
dadurch gekennzeichnet,
daß Fluidkupplungen (33) zur Fluidzuleitung von im Gehäuse (15) verlaufenden Leitungen (24) zu einem im Düsenkopf (20) verlaufenden Kanalsystem (34) vorgesehen sind.

4. Werkzeugmaschine nach einem der Ansprüche 1 bis 3,
dadurch gekennzeichnet,
daß das Gehäuse (15) fest am Maschinenständer (2) montiert ist und ein motorisch längsverschiebbares Führungsrohr (16) aufnimmt, in welchem die Arbeitsspindel (28) und der Antriebsmotor (30, 31) montiert sind.

5. Werkzeugmaschine nach einem der Ansprüche 1 bis 4,
dadurch gekennzeichnet,
daß die Arbeitsspindel (28) und die Arretierelemente (27) zur Aufnahme und Fixierung eines standardisierten Werkzeughalters (41) für spanende Werkzeuge (40) ausgelegt sind.

## Claims

1. A machine tool for selective workpiece processing by means of a laser beam or by means of a cutting tool,
comprising a housing (15) mounted on a machine stand (2),
comprising a laser unit (18) mounted on the housing and
comprising a motor-driven work spindle (25, 28) which is mounted in the housing (15) and which comprises locking elements (27) for clamping a tool holder (29, 41),
characterised in that
the laser beam is supplied to a nozzle head (20) along the axis (18) of the hollow work spindle (28),
in that the nozzle head (20) comprises a focusing optical system (32) for the laser beam and, if required, feed means (34) for at least one fluid to the central outlet aperture (36) of the laser beam and
in that a high-speed motor (30, 31) is disposed in the housing (15) coaxially of the spindle axis (18) and its hollow cylindrical rotor (30) drives the work spindle (28) for workpiece processing by means of a cutting tool.

2. A machine tool according to claim 1, characterised in that the focusing optical system (32) and the nozzle head (20) are attached to a tool holder (29) interchangeable in the work spindle (28).

3. A machine tool according to claim 1 or 2, characterised in that fluid couplings (33) are provided to supply fluid from conduits (24) extending in the housing (15) to a duct system (34) extending in the nozzle head (20).

4. A machine tool according to any one of claims 1 to 3, characterised in that the housing (15) is mounted fixedly on the machine stand (2) and receives a guide tube (16) which is longitudinally movable by a motor and in which the work spindle (28) and the drive motor (30, 31) are mounted.

5. A machine tool according to any one of claims 1 to 4, characterised in that the work spindle (28) and the locking elements (27) are designed to receive and fix a standardised tool holder (41) for cutting tools (40).

## Revendications

1. Machine-outil pour l'usinage au choix de pièces au moyen d'un faisceau laser ou au moyen d'un outil à enlèvement de matière, comportant un boîtier (15) monté sur une colonne de machine (2), une unité à laser (18) montée sur le boîtier, et une broche de travail (25, 28) entraînée par moteur et montée dans le boîtier (15), ladite broche présentant des éléments d'arrêt (27) pour serrer un porte-outil (29, 41), caractérisée en ce que l'amenée du faisceau laser vers une tête de tuyère (20) s'effectue dans l'axe (18) de la broche de travail (28) creuse, en ce que la tête de la tuyère (20) présente une optique de focalisation (32) pour le faisceau laser ainsi que, le cas échéant, des conduites (34) pour au moins un fluide vers l'orifice d'émergence (36) central du faisceau laser, et en ce qu'un moteur rapide (30, 31) est agencé dans le boîtier (15) coaxialement à l'axe de la broche (18), moteur dont le rotor (30) cylindrique creux entraîne la broche (28) pendant l'usinage de pièces par enlèvement de matière.

2. Machine-outil selon la revendication 1, caractérisée en ce que l'optique de focalisation (32) et la tête de la tuyère (20) sont montées sur un porte-outil (29) interchangeable dans la broche (28).

3. Machine-outil selon la revendication 1 ou 2, caractérisée en ce que des raccords de fluide (33) sont prévus pour amener le fluide depuis des conduites (24) s'étendant dans le boîtier vers un système de canaux (34) s'étendant dans la tête de la tuyère (20).

4. Machine-outil selon l'une quelconque des revendications 1 à 3, caractérisée en ce que le boîtier (15) est monté solidaire de la colonne de machine (2) et reçoit un tube de guidage (16) à déplacement longitudinal motorisé, tube dans lequel sont montés la broche (28) et le moteur d'entraînement (30, 31).

5. Machine-outil selon l'une quelconque des revendications 1 à 4, caractérisée en ce que la broche (28) et les éléments d'arrêt (27) sont conçus pour recevoir et fixer un porte-outil (41) standardisé pour outils (40) à enlèvement de matière.
